# EUROPEAN PATENT APPLICATION

(11) **EP 4 664 665 A1**
(43) Date of publication of application: **17.12.2025**
(21) Application number: 24849373.6
(22) Date of filing: 24.06.2024
(51) Int. Cl.: H01M 50/59, H01M 50/586, H01M 50/107, H01M 50/30, H01M 50/213, H01M 50/249

(54) **CYLINDRICAL BATTERY CELL, BATTERY PACK AND VEHICLE INCLUDING SAME, AND CURRENT COLLECTOR PLATE**

(30) Priority: 28.07.2023 KR 20230099233
(71) Applicant: LG Energy Solution, Ltd., Seoul 07335 (KR)
(72) Inventor: JEONG, An-Soo, Daejeon 34122 (KR)
(74) Representative: Goddar, Heinz J.
(86) International application number: PCT/KR2024/008719
(87) International publication number: WO 2025/028802

(57) **Abstract**

Disclosed are a cylindrical battery cell, a battery pack and vehicle including the same, and a collector board. A cylindrical battery cell according to an embodiment of the present disclosure includes: an electrode assembly configured in a structure in which a positive electrode plate, a negative electrode plate, and a separator interposed between the positive electrode plate and the negative electrode plate are wound in one direction; a cylindrical battery can configured to store the electrode assembly and having a through-hole formed thereon; a positive electrode collector board electrically connected to the positive electrode plate; a cell terminal connected to the positive electrode collector board through the through-hole of the battery can; and a negative electrode collector board electrically connected to the negative electrode plate, wherein a breaking induction portion is formed on the positive electrode collector board or the negative electrode collector board so that at least a portion of the positive electrode collector board or the negative electrode collector board is broken by gas generated inside the battery can.

## Description

### TECHNICAL FIELD

The present application claims priority to Korean Patent Application No. 10-2023-0099233 filed on July 28, 2023 in the Republic of Korea, the disclosures of which are incorporated herein by reference.

The present disclosure relates to a cylindrical battery cell, a battery pack and a vehicle including the same, and a collector board, and more specifically, it relates to a cylindrical battery cell capable of reducing the internal pressure of the cylindrical battery cell, a battery pack and a vehicle including the same, and a collector board.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell is approximately 2.5V to 4.5V.

Therefore, when an output voltage higher than this is required, a battery pack may be configured by connecting a plurality of battery cells in series. In addition, a battery module or a battery pack may be configured by connecting multiple battery cells in parallel depending on the charge/discharge capacity required therefor. Accordingly, the number of battery cells included in the battery pack and the electrical connection type thereof may be set in various ways depending on at least one of the required output voltage or charge/discharge capacity.

Meanwhile, as a type of secondary battery cell, cylindrical, prismatic, and pouch-type battery cells are known. In the case of a cylindrical battery cell, a separator, which is an insulator, is interposed between a positive electrode plate and a negative electrode plate, and this is wound to form a jelly-roll-type electrode assembly, which is then inserted into a battery can together with an electrolyte to form a battery. In addition, a collector board may be used to electrically connect each of the positive electrode plate and the negative electrode plate in the cylindrical battery cell.

Repeated charge and discharge cycles of the cylindrical battery cell may generate gas inside the electrode assembly, thereby increasing the internal pressure, and if this internal pressure is not reduced, an explosion may occur, so a venting portion may be formed in various ways in the cylindrical battery cell.

However, a conventional cylindrical battery cell has a problem in which gas discharge is not easy because the collector board blocks the space between the central portion and the venting portion of the electrode assembly.

### DISCLOSURE

### Technical Problem

The present disclosure has been designed to solve the problems of the related art, and therefore the present disclosure is directed to providing a cylindrical battery cell in which the shape of a collector board is deformed due to the internal pressure increased when gas is generated inside the cylindrical battery cell, thereby reducing the internal pressure and preventing an explosion, a battery pack and a vehicle including the same, and a collector board.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a cylindrical battery cell that includes: an electrode assembly configured in a structure in which a positive electrode plate, a negative electrode plate, and a separator interposed between the positive electrode plate and the negative electrode plate are wound in one direction; a cylindrical battery can configured to store the electrode assembly and having a through-hole formed thereon; a positive electrode collector board electrically connected to the positive electrode plate; a cell terminal connected to the positive electrode collector board through the through-hole of the battery can; and a negative electrode collector board electrically connected to the negative electrode plate, wherein a breaking induction portion is formed on the positive electrode collector board or the negative electrode collector board so that at least a portion of the positive electrode collector board or the negative electrode collector board is broken by gas generated inside the battery can.

In an embodiment, the positive electrode collector board or the negative electrode collector board may include: a rim portion defining a rim; a central portion spaced apart from the rim portion and coupled to the electrode assembly; and a connecting portion configured to connect the rim portion and the central portion.

In an embodiment, the breaking induction portion may be formed in the connecting portion.

In an embodiment, the breaking induction portion may be formed in the connecting portion at a position where the central portion and the connecting portion meet.

In an embodiment, the breaking induction portion may be formed as a notched groove.

In an embodiment, the breaking induction portion may be formed as a through-hole.

In an embodiment, four connecting portions may be provided, and eight notched grooves may be provided such that a pair of notched grooves is formed in each connecting portion.

In an embodiment, the notched groove may be formed to be recessed toward an inside of the connecting portion in a direction in which a width or thickness of the connecting portion is gradually or continuously reduced.

In an embodiment, the breaking induction portion may be configured to include a twisted portion formed by twisting the connecting portion.

In an embodiment, the twisted portion may include: a first portion connected to the central portion; and a second portion configured to be twisted and folded from the first portion and then bonded to the rim portion.

In an embodiment, the twisted portion may be formed in a curved shape so as to rotate gas.

In an embodiment, the twisted portion may be configured such that the connecting portion is rotated 180 degrees from the central portion and coupled to the rim portion.

Meanwhile, according to another aspect of the present disclosure, there may be provided a battery pack including at least one cylindrical battery cell described above, and there may be provided a vehicle including at least one cylindrical battery cell described above.

Meanwhile, according to another aspect of the present disclosure, there may be provided a collector board electrically connecting an electrode assembly located at a portion where a venting portion is formed in a cylindrical battery cell, the collector board including: a rim portion defining a rim; a central portion spaced apart from the rim portion and coupled to the electrode assembly; and a connecting portion configured to connect the rim portion and the central portion, wherein a breaking induction portion is formed on the collector board so that at least a portion of the collector board is broken by gas generated inside the cylindrical battery cell.

### Advantageous Effects

The embodiments of the present disclosure have the effect of reducing the internal pressure by deformation of the shape of the collector board when gas is generated inside the cylindrical battery cell to increase the internal pressure.

In addition, there is the effect of preventing an explosion of the cylindrical battery cell.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a cylindrical battery cell according to an embodiment of the present disclosure.
FIG. 2 is a cross-sectional view of a cylindrical battery cell according to an embodiment of the present disclosure.
FIG. 3 is a diagram illustrating a battery can in a cylindrical battery cell according to an embodiment of the present disclosure.
FIG. 4 is a perspective view of a negative electrode collector board of a cylindrical battery cell according to an embodiment of the present disclosure.
FIGS. 5 to 10 are perspective views of negative electrode collector boards according to modifications of the embodiment in FIG. 4, respectively.
FIG. 11 is a perspective view illustrating the negative electrode collector board in FIG. 10 whose shape has changed.
FIG. 12 is a diagram schematically illustrating the configuration of a battery pack including a cylindrical battery cell according to each embodiment of the present disclosure.
FIG. 13 is a diagram illustrating a vehicle including a battery pack according to each embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The expression "one element is 'coupled,' or 'fastened ' to the other element" should be understood that the elements may be directly coupled or fastened to each other, and that the elements may be indirectly coupled or fastened to each other through another element.

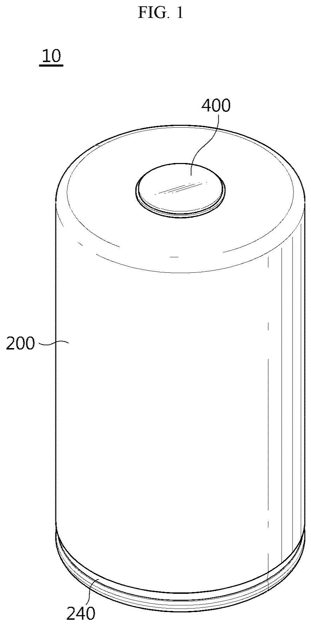

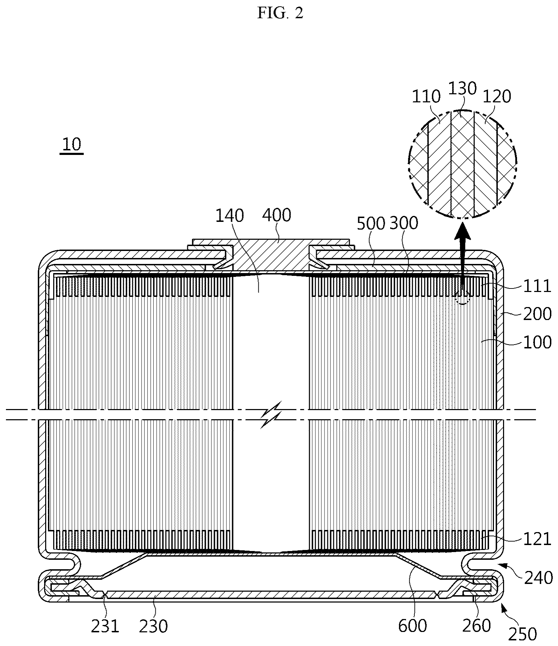

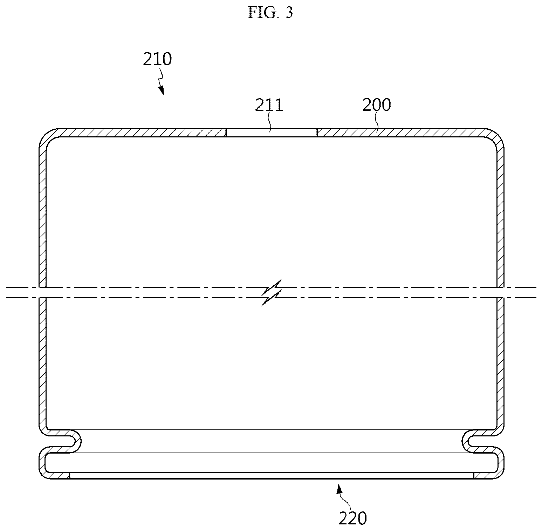

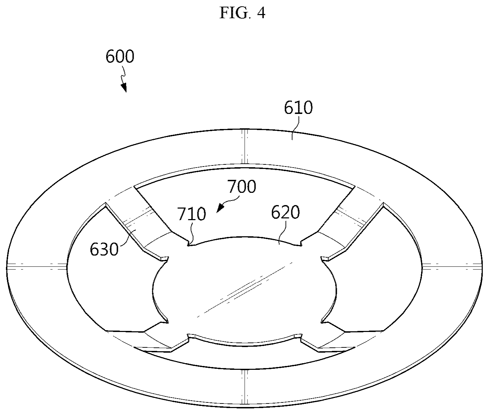

FIG. 1 is a perspective view of a cylindrical battery cell according to an embodiment of the present disclosure, FIG. 2 is a cross-sectional view of a cylindrical battery cell according to an embodiment of the present disclosure, FIG. 3 is a diagram illustrating a battery can in a cylindrical battery cell according to an embodiment of the present disclosure, and FIG. 4 is a perspective view of a negative electrode collector board of a cylindrical battery cell according to an embodiment of the present disclosure.

Referring to FIGS. 1 and 2, a cylindrical battery cell 10 according to an embodiment of the present disclosure includes an electrode assembly 100, a battery can 200, a positive electrode collector board 300, a cell terminal 400, and a negative electrode collector board 600.

Referring to FIG. 2, the electrode assembly 100 has a structure in which a positive electrode plate 110, a negative electrode plate 120, and a separator 130 that is interposed between the positive electrode plate 110 and the negative electrode plate 120 are wound in one direction. In addition, a center hole 140 may be formed at the center of the electrode assembly 100 to configure a jelly-roll type.

For example, the electrode assembly 100 may be manufactured by winding a stack obtained by sequentially stacking the negative electrode plate 120, the separator 130, the positive electrode plate 110, and the separator 130 at least once. Here, the positive electrode plate 110 and the negative electrode plate 120 may be formed in a sheet shape.

That is, the electrode assembly 100 applied to the present embodiment may be a winding-type electrode assembly 100. In this case, an additional separator may be provided on the outer surface of the electrode assembly 100 for insulation from the battery can 200. That is, the electrode assembly 100 may have a winding structure well known in the related art without limitation.

The positive electrode plate 110 may have a positive electrode active material applied on one or both sides thereof, and a first uncoated portion 111 (see FIG. 2) on which the positive electrode active material is not applied may be formed at an end of the positive electrode plate 110. Although FIG. 2 illustrates the positive electrode plate 110 on which the first uncoated portion 111 is formed, the cylindrical battery cell 10 according to an embodiment of the present disclosure includes an embodiment of a positive electrode plate 110 on which the first uncoated portion 111 is not formed. However, for convenience of explanation, the following description will be made based on the positive electrode plate 110 having the first uncoated portion 111 formed thereon. The first uncoated portion 111 may be exposed to the outside of the separator 130 while forming a plurality of winding turns around the center of the electrode assembly 100 and may be used as an electrode tab in itself.

The negative electrode plate 120 may have a negative electrode active material applied to one or both sides thereof, and a second uncoated portion 121 (see FIG. 2) on which the negative electrode active material is not applied may be formed at an end of the negative electrode plate 120. Although FIG. 2 illustrates the negative electrode plate 120 on which the second uncoated portion 121 is formed, the cylindrical battery cell 10 according to an embodiment of the present disclosure includes an embodiment of a negative electrode plate 120 on which the second uncoated portion 121 is not formed. However, for convenience of explanation, the following description will be made based on the negative electrode plate 120 having the second uncoated portion 121 formed thereon. The second uncoated portion 121 may be exposed to the outside of the separator 130 while forming a plurality of turns around the center of the electrode assembly 100 and may be used as an electrode tab in itself.

That is, at least one of the positive electrode plate 110 and the negative electrode plate 120 may include an uncoated portion on which the active material is not coated at the long-side end in the winding direction. In addition, the first uncoated portion 111 and the second uncoated portion 121 may be configured to be directed in opposite directions to each other.

Here, any active material known in the art may be used for the positive electrode active material coated on the positive electrode plate 110 and the negative electrode active material coated on the negative electrode plate 120 without limitation.

In addition, the separator 130 may be configured as a single porous polymer film, for example, a porous polymer film manufactured from a polyolefin polymer such as an ethylene homopolymer, a propylene homopolymer, an ethylene/butene copolymer, an ethylene/hexene copolymer, an ethylene/methacrylate copolymer, or the like, or as a stack thereof.

As another example, a conventional porous nonwoven fabric, such as a nonwoven fabric made of high-melting-point glass fiber, polyethylene terephthalate fiber, and the like, may be used for the separator 130.

The separator 130 may include a coating layer of inorganic particles on at least one surface thereof. In addition, the separator 130 itself may be formed of a coating layer of inorganic particles. The particles constituting the coating layer may have a structure in which they are combined with a binder so that an interstitial volume exists between adjacent particles.

In addition, the center hole 140 of the electrode assembly 100 is also used for welding the cell terminal 400 (positive electrode terminal) and the positive electrode collector board 300. That is, a laser may be radiated through the center hole 140 of the electrode assembly 100, thereby welding the cell terminal 400 and the positive electrode collector board 300.

Referring to FIG. 2, the electrode assembly 100 is received inside the battery can 200. In addition, referring to FIG. 3, a through-hole 211 is formed in the battery can 200. For example, the battery can 200 may be formed cylindrically so that the electrode assembly 100 is accommodated inside the battery can 200, and may be electrically connected to the negative electrode plate 120 of the electrode assembly 100. Accordingly, the battery can 200 may have the same polarity as the negative electrode plate 120, i.e., a negative polarity.

Here, the diameter of the battery can 200 is formed to be greater than the diameter of the electrode assembly 100. A gap of a preset size may be formed between the battery can 200 and the positive electrode collector board 300, and an insulator 500 may be provided in the gap.

If the size of the electrode assembly 100 is increased in the state in which the size of the battery can 200 is fixed according to the standard, the total capacity of the battery cell increases, but the gap between the battery can 200 and the electrode assembly 100 decreases.

That is, since the gap between the battery can 200 and the electrode assembly 100 is reduced if the size of the electrode assembly 100 is increased in order to increase the total capacity of the battery cell, the insulator 500 must be provided in the reduced gap between the battery can 200 and the electrode assembly 100 in order to increase the capacity of the battery cell, so, to this end, it is desirable that the thickness of the insulator 500 be as thin as possible.

Referring to FIG. 3, the battery can 200 may have a closed portion 210 and an opening 220, which are positioned opposite to each other.

For example, in FIG. 3, an opening 220 may be formed at the bottom of the battery can 200. The battery can 200 receives the electrode assembly 100 through the opening 220 formed at the bottom, and the electrolyte is also injected through the opening 220 formed at the bottom of the battery can 200.

That is, the battery can 200 is a roughly cylindrical container with an opening 220 formed at the bottom, and may be made of a conductive material such as metal. The battery can 200 may be made of a conductive metal, such as aluminum, steel, stainless steel, or the like, but is not limited thereto.

In addition, in FIG. 3, a closed portion 210 may be formed in the upper portion of the battery can 200. The closed portion 210 may be partially formed on the opposite side of the opening 220. A through-hole 211 is formed in the closed portion 210, and as shown in FIG. 2, a cell terminal 400 is coupled to the through-hole 211 and electrically connected to the positive electrode collector board 300 through the through-hole 211. In addition, referring to FIG. 2, an insulator 500 may be interposed between the battery can 200 on the side of the closed portion 210 and the positive electrode collector board 300.

The positive electrode collector board 300 is electrically connected to the positive electrode plate 110, and for example, referring to FIG. 2, the positive electrode collector board 300 is connected to the positive electrode plate 110 in the upper portion of the electrode assembly 100. Here, a breaking induction portion 700 may be formed in the positive electrode collector board 300. As will be described in detail below, the present disclosure will be described based on the case where the breaking induction portion 700 is formed in the negative electrode collector board 600, and the description of the negative electrode collector board 600 may also be applied to the case where a breaking induction portion 700 is formed in the positive electrode collector board 300.

The positive electrode collector board 300 is made of a conductive metal and is connected to the first uncoated portion 111 of the electrode assembly 100. The positive electrode collector board 300 may be coupled to the top of a coupling surface formed by bending the end of the first uncoated portion 111 in a direction parallel to the positive electrode collector board 300. The bending direction of the first uncoated portion 111 may be, for example, a direction toward the central winding portion of the electrode assembly 100.

If the first uncoated portion 111 has the bent shape described above, the space occupied by the first uncoated portion 111 may be reduced, thereby improving the energy density. In addition, the coupling area between the first uncoated portion 111 and the positive electrode collector board 300 may increase, thereby improving bonding strength and reducing resistance.

The cell terminal 400 is made of a conductive metal and is connected to the through-hole 211 formed in the closed portion 210 of the battery can 200 so as to be electrically connected to the positive electrode collector board 300 through the through-hole 211. In addition, the cell terminal 400 is electrically connected to the positive electrode plate 110 of the electrode assembly 100 through the positive electrode collector board 300 and thus has a positive polarity.

That is, the cell terminal 400 may function as a positive electrode terminal. In addition, the battery can 200 may be electrically connected to the negative electrode plate 120 of the electrode assembly 100 and thus has a negative polarity, as described above.

Referring to FIG. 2, the negative electrode collector board 600 is electrically connected to the negative electrode plate 120. Here, a breaking induction portion 700 may be formed in the negative electrode collector board 600. However, the breaking induction portion 700 will be described later.

The negative electrode collector board 600 is connected to the second uncoated portion 121 of the electrode assembly 100. The negative electrode collector board 600 is coupled to the lower portion of the electrode assembly 100. The negative electrode collector board 600 may be made of a conductive metal such as aluminum, steel, copper, nickel, or the like, and electrically connected to the second uncoated portion 121 of the negative electrode plate 120.

The negative electrode collector board 600 may be electrically connected to the battery can 200. To this end, at least a portion of the edge of the negative electrode collector board 600 may be interposed and fixed between the inner surface of the battery can 200 and the sealing gasket 260.

As an embodiment, at least a portion of the edge of the negative electrode collector board 600 may be supported on the lower surface of a beading portion 240 formed at the lower end of the battery can 200 and fixed to the beading portion 240 by welding. In a modified embodiment, at least a portion of the edge of the negative electrode collector board 600 may be directly welded to the inner wall surface of the battery can 200.

In addition, at least a portion of the remaining portion of the negative electrode collector board 600, excluding the bonding portion of the beading portion 240, may be coupled to the bent surface of the second uncoated portion 121 by welding, for example, laser welding.

In addition, at least a portion of the edge of the negative electrode collector board 600 may be electrically coupled to one of the upper and lower surfaces of the beading portion 240 adjacent to a crimping portion 250.

Referring to FIG. 2, a cap plate 230 is configured to seal the opening 220 (see FIG. 3) formed at the bottom of the battery can 200. The cap plate 230 may be made of, for example, a metal to secure rigidity.

In addition, the cap plate 230 may be separated from the electrode assembly 100 so as to not have a polarity. That is, even if the cap plate 230 is made of a conductive metal, it may not have a polarity.

The fact that the cap plate 230 does not have a polarity indicates that the cap plate 230 is electrically insulated from the battery can 200 and the cell terminal 400. As described above, the cap plate 230 may not have a polarity, and is not necessarily made of a conductive metal.

The cap plate 230 may be placed and supported on the beading portion 240 formed in the battery can 200. In addition, the cap plate 230 is fixed by the crimping portion 250. A sealing gasket 260 may be interposed between the cap plate 230 and the crimping portion 250 of the battery can 200 to ensure airtightness of the battery can 200. That is, the sealing gasket 260 may be configured to be interposed between the edge of the cap plate 230 and the opening 220 of the battery can 200.

The beading portion 240 and the crimping portion 250 may be formed in the lower portion of the battery can 200.

The beading portion 240 is formed by pressing the outer circumference of the battery can 200 inward in an area adjacent to the opening 220 of the battery can 200.

The beading portion 240 may support the electrode assembly 100, which has a size roughly corresponding to the width of the battery can 200, so that the electrode assembly 100 does not come out through the opening 220 formed at the bottom of the battery can 200, and may also function as a support on which the cap plate 230 is seated. In addition, the beading portion 240 may support the outer surface of the sealing gasket 260.

The crimping portion 250 is configured to extend and bend to the inside of the battery can 200 and wrap and fix the edge of the cap plate 230 together with the sealing gasket 260. Here, the crimping portion 250 is formed at the bottom of the battery can 200, based on the arrangement of the battery can 200. For example, in the case where the battery can 200 is arranged so that the cell terminal 400 is located at the top as shown in FIG. 2, the crimping portion 250 is formed at the bottom of the battery can 200 based on FIG. 2. In addition, as shown in FIG. 2, the crimping portion 250 is formed below the beading portion 240. However, this is only an embodiment, and the positions of the crimping portion 250 and the beading portion 240 are not limited thereto.

In addition, the present disclosure does not exclude a case where the battery can 200 does not have at least one of the beading portion 240 and the crimping portion 250. In the present disclosure, if the battery can 200 does not have at least one of the beading portion 240 and the crimping portion 250, the fixing of the electrode assembly 100, the fixing of the cap plate 230, or the sealing of the battery can 200 may be realized by at least one of additional application of a component that may function as a stopper for the electrode assembly 100, additional application of a structure on which the cap plate 230 is able to be seated, and welding between the battery can 200 and the cap plate 230.

In FIG. 2, the crimping portion 250 is formed below the beading portion 240. The crimping portion 250 is configured to extend and bend so as to surround the edge of the cap plate 230 disposed below the beading portion 240. The cap plate 230 is fixed onto the beading portion 240 by the bent shape of the crimping portion 250.

Meanwhile, the battery can 200 of the present disclosure may not have at least one of the beading portion 240 and the crimping portion 250, and in this case, the sealing gasket 260 may be interposed between a fixing structure provided on the side of the opening 220 in the battery can 200 and the cap plate 230 to secure the airtightness of the battery can 200.

For example, it is also possible to exclude the crimping portion 250 and cause the cap plate 230 to cover the opening 220 of the battery can 200 and be fixed using another fixing structure. For example, Korean Unexamined Patent Publication KR 10-2019-0030016A filed by the applicant discloses a cylindrical battery cell excluding the beading portion 240, and such a structure may be applied to the present disclosure.

A vent notch 231 may be formed in the cap plate 230 so as to break when the pressure inside the battery can 200 exceeds a threshold.

For example, the vent notch 231 may be formed on both sides of the cap plate 230, and may be formed in at least one pattern among a continuous circular pattern, a discontinuous circular pattern, and a linear pattern on the surface of the cap plate 230. In addition, the vent notch 231 may be formed in various other patterns.

The vent notch 231 may be formed at the bottom of the battery can 200, based on the arrangement of the battery can 200 in FIG. 2, and may be configured such that gas is discharged from the battery can 200 through the bottom of the battery can 200 when the vent notch 231 breaks. For example, in the case where the cell terminal 400 is positioned at the top of the battery can 200 as shown in FIG. 2, the vent notch 231 may be formed at the bottom of the battery can 200.

The vent notch 231 may be formed to be thinner than the surrounding area of the cap plate 230.

Since the vent notch 231 is thinner than the surrounding area, it may be more easily broken than the surrounding area, and when the internal pressure of the battery can 200 increases to a certain level or more, the vent notch 231 may break to discharge gas generated inside the battery can 200.

For example, the vent notch 231 may be formed by notching one side or both sides of the cap plate 230, thereby partially reducing the thickness of the battery can 200.

The cylindrical battery cell 10 according to an embodiment of the present disclosure may have a structure in which both the positive electrode terminal and the negative electrode terminal are positioned in the upper portion in FIG. 2, and thus the upper structure is more complex than the lower structure.

Therefore, in order to smoothly discharge gas generated inside the battery can 200, the vent notch 231 may be formed on the cap plate 230 constituting the lower surface of the cylindrical battery cell 10.

As described above, if the gas generated inside the battery can 200 provided in the cylindrical battery cell 10 is discharged downward, it may be advantageous for the safety of the user.

For example, in the case where the cylindrical battery cell 10 is disposed directly under the driver's seat in an electric vehicle, if the gas is discharged upward, there may be a risk of a safety accident for the driver. However, if the gas is discharged downward from the battery can 200 as in the cylindrical battery cell 10 according to an embodiment of the present disclosure, the above problem does not occur even if the cylindrical battery cell 10 is disposed directly under the driver's seat in an electric vehicle.

Hereinafter, the breaking induction portion 700 will be described. The breaking induction portion 700 may be formed on the collector board disposed in a direction in which the gas is discharged. That is, the breaking induction portion 700 may be formed on the collector board that electrically connects the electrode assembly 100 located in the area where the venting portion is formed in the cylindrical battery cell 10.

In the present embodiment, the venting portion may be the vent notch 231 formed on the cap plate 230, and in this case, the breaking induction portion 700 may be formed on the negative electrode collector board 600 located in the area where the vent notch 231 is formed.

For example, as described above, since the gas generated inside the battery can 200 provided in the cylindrical battery cell 10 is discharged downward in FIG. 2, the breaking induction portion 700 is formed on the negative electrode collector board 600 located at the bottom. In addition, although not shown in the drawing, for example, in the case where gas is discharged through the upper portion of the cylindrical battery cell 10 and where the positive electrode collector board 300 is disposed at the top, the breaking induction portion 700 may be formed on the positive electrode collector board 300.

That is, depending on the direction of gas discharge, the breaking induction portion 700 may be formed on the positive electrode collector board 300 or on the negative electrode collector board 600. However, in the embodiment shown in FIG. 2, since the breaking induction portion 700 is formed on the negative electrode collector board 600, the following description will be made based on the case where the breaking induction portion 700 is formed on the negative electrode collector board 600 for the convenience of explanation. In addition, the description of the embodiment where the breaking induction portion 700 is formed on the negative electrode collector board 600 may also be applied to the embodiment where the breaking induction portion 700 is formed on the positive electrode collector board 300.

As shown in FIG. 2, the breaking induction portion 700 is formed on the negative electrode collector board 600 and configured so that at least a portion of the negative electrode collector board 600 is broken by gas generated inside the battery can 200.

Referring to FIG. 2, since the negative electrode collector board 600 is positioned between the center hole 140 of the electrode assembly 100 and the cap plate 230, when the gas generated inside the battery can 200 moves toward the cap plate 230 through the center hole 140, the movement is impeded by the negative electrode collector board 600.

That is, if the negative electrode collector board 600 remains at its original position, the gas generated inside the battery can 200 is not easily discharged due to the interference of the negative electrode collector board 600, thereby increasing the internal pressure of the battery can 200. However, if the internal pressure of the battery can 200 is left unattended without being reduced, an explosion may occur in the cylindrical battery cell 10.

Therefore, in order to solve this problem, the cylindrical battery cell 10 according to an embodiment of the present disclosure is configured such that the breaking induction portion 700 is formed on the negative electrode collector board 600 so that the negative electrode collector board 600 is broken by the internal pressure of the battery can 200.

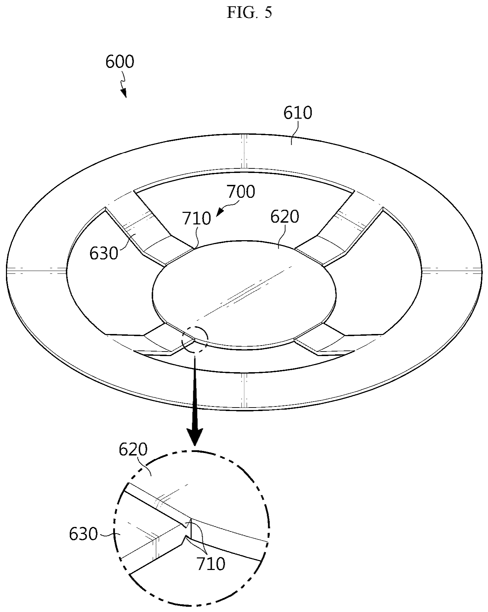

Referring to FIG. 4, the negative electrode collector board 600 may be configured to include a rim portion 610, a central portion 620, and a connecting portion 630. FIG. 4 shows the negative electrode collector board 600 viewed from the opposite direction in FIG. 2. That is, although the central portion 620 is located above the rim portion 610 in FIG. 2, the central portion 620 is located below the rim portion 610 in FIG. 4. This is also the same in FIGS. 5 to 11 below.

The rim portion 610 defines a rim, and may have an approximate rim shape in which at least a portion of the inner region is empty to form an inner space. Although the rim portion 610 is shown as having an approximately circular rim shape in FIG. 4, the shape of the rim portion 610 is not limited thereto. Unlike what is shown, the rim portion 610 may have an approximately square rim shape, hexagonal rim shape, octagonal rim shape, or other shapes. The rim portion 610 may be coupled to the connecting portion 630.

The central portion 620 is located inside the rim portion 610 and is spaced apart from the rim portion 610. For example, the central portion 620 may be positioned at the exact center of the inner space of the rim portion 610, but is not limited thereto. In addition, the central portion 620 is coupled to the connecting portion 630 and is connected to the rim portion 610 by the connecting portion 630. In addition, the central portion 620 is coupled to the electrode assembly 100. Here, the central portion 620 may be disposed at a position corresponding to the center hole 140 of the electrode assembly 100.

The connecting portion 630 connects the rim portion 610 and the central portion 620. A plurality of connecting portions 630 may be provided, and the plurality of connecting portions 630 may be spaced apart from each other. Although four connecting portions 630 are provided in FIG. 4, the number of connecting portions 630 is not limited thereto. In addition, the plurality of connecting portions 630 may be disposed at equal intervals, but are not limited thereto.

Here, the breaking induction portion 700 may be formed at various positions and formed in, for example, the connecting portion 630. As an embodiment, as shown in FIG. 4, the breaking induction portion 700 may be formed in the connecting portion 630 at the position where the central portion 620 and the connecting portion 630 meet. However, the breaking induction portion 700 does not have to be formed only at the position where the central portion 620 and the connecting portion 630 meet, and may be formed at any position of the connecting portion 630.

Referring to FIG. 4, the breaking induction portion 700 may be formed as a groove, for example, a notched groove 710, in which the width of the connecting portion 630 is reduced at the position where the central portion 620 and the connecting portion 630 meet. In addition, the notched groove 710 may be formed to be recessed toward the inside of the connecting portion 630 in a direction in which the width of the connecting portion 630 is gradually or continuously reduced (in the left-right direction of the connecting portion 630). That is, the notched groove 710 may be formed in the width direction from the outer end of the connecting portion 630 toward the inside thereof. Here, the outer end of the connecting portion 630 is on the side of the rim portion 610, and the inner end of the connecting portion 630 is on the side of the central portion 620.

The notched groove 710 may have various shapes. Although it is formed in a triangular shape in FIG. 4, it is not limited thereto, and may have more diverse shapes.

In addition, as shown in FIG. 4, a pair of breaking induction portions 700 may be provided to be disposed on both ends of the connecting portion 630, respectively. For example, four connecting portions 630 may be provided, and eight notched grooves 710 may be formed so that one pair of notched grooves is provided in each connecting portion 630, but the disclosure is not limited thereto.

As described above, if the breaking induction portion 700 such as the notched groove 710 is formed in the connecting portion 630, when the internal pressure of the battery can 200 increases, the connecting portion 630 may break in the notched groove 710, so that the central portion 620 coupled to the electrode assembly 100 may also be easily removed.

In addition, if the central portion 620 is removed and if the center hole 140 of the electrode assembly 100 is opened, the gas inside the battery can 200 moves toward the cap plate 230 through the center hole 140 and breaks the vent notch 231 formed in the cap plate 230. Therefore, the gas inside the battery can 200 may be easily discharged from the battery can 200.

In addition, the internal pressure of the cylindrical battery cell 10 may be reduced by the discharge of the gas inside the battery can 200, thereby preventing the explosion of the cylindrical battery cell 10.

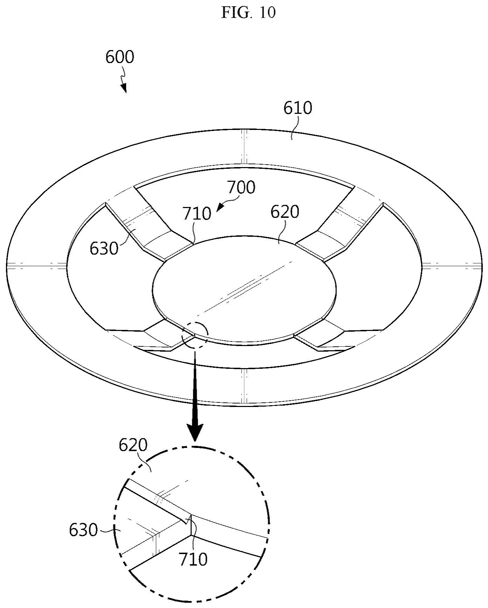

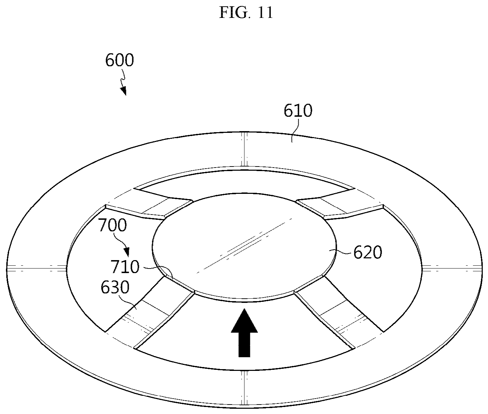

FIGS. 5 to 10 are perspective views of negative electrode collector boards according to modifications of the embodiment in FIG. 4, respectively, and FIG. 11 is a perspective view illustrating the negative electrode collector board in FIG. 10 whose shape has changed.

The description of the embodiment in FIG. 4 may also be applied to the modified embodiments in FIGS. 5 to 11 in relation to redundant components. In addition, the description of the embodiment in FIG. 4, which is applicable to the modified embodiments in FIGS. 5 to 11, may be applied to the modified embodiments in FIGS. 5 to 11.

Referring to FIG. 5, like the embodiment in FIG. 4, the breaking induction portion 700 may be formed as a groove, for example, a notched groove 710. However, the groove is formed such that the width (in the left-right direction) of the connecting portion 630 is reduced in FIG. 4, whereas the groove is formed such that the thickness (in the up-down direction) of the connecting portion 630 is reduced in FIG. 5. That is, the notched groove 710 may be formed to be recessed toward the inside of the connecting portion 630 in a direction in which the thickness of the connecting portion 630 is gradually or continuously reduced.

Referring to FIG. 5, the notched groove 710 may be formed on the upper and lower surfaces of the connecting portion 630, respectively, at the position where the central portion 620 and the connecting portion 630 meet. As described above, even if the notched groove 710 is formed such that the thickness of the connecting portion 630 is reduced, the connecting portion 630 may break in the notched groove 710 by the internal pressure of the battery can 200.

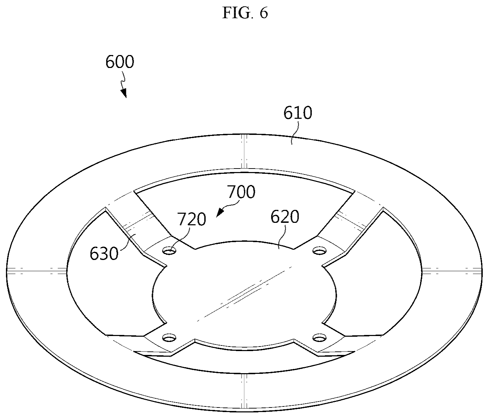

Referring to FIG. 6, the breaking induction portion 700 may be formed as a through-hole 720. Here, the through-hole 720 may be formed in any portion of the connecting portion 630. For example, the through-hole 720 may be formed in the middle of the connecting portion 630, or may be formed in the connecting portion 630 at the position where the central portion 620 and the connecting portion 630 meet.

Various numbers of through-holes 720 may be provided. For example, although one through-hole 720 is formed in one connecting portion 630 in FIG. 6, this is only an embodiment, and the number of through-holes 720 formed in one connecting portion 630 may vary.

In addition, the through-hole 720 may have various shapes. For example, although the circular through-hole 720 is formed in the connecting portion 630 in FIG. 6, this is only an embodiment, and the shape of the through-hole 720 may vary, such as an oval, triangle, or square.

As described above, if the through-hole 720 is formed in the connecting portion 630, the connecting portion 630 may easily break due to the internal pressure of the battery can 200.

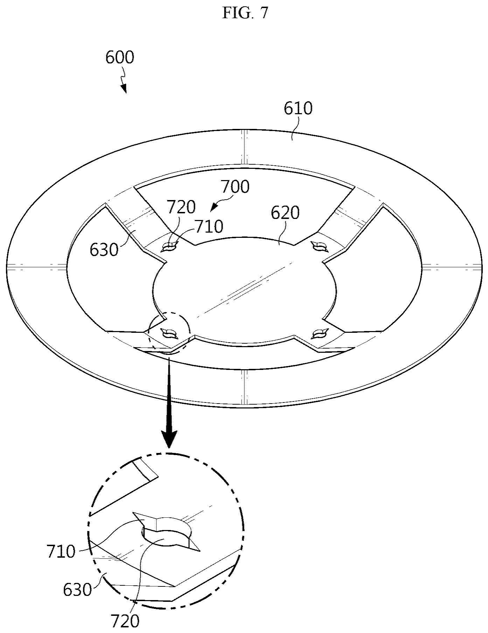

In addition, referring to FIG. 7, the breaking induction portion 700 is configured such that a notched groove 710 is further formed in the circular through-hole 720. That is, a pair of triangular notched grooves 710 is formed from the circumference of the circular through-hole 720 toward the outside. Here, the pair of notched grooves 710 may be formed to face in opposite directions. Here, the shapes of the through-hole 720 and the notched groove 710 may vary.

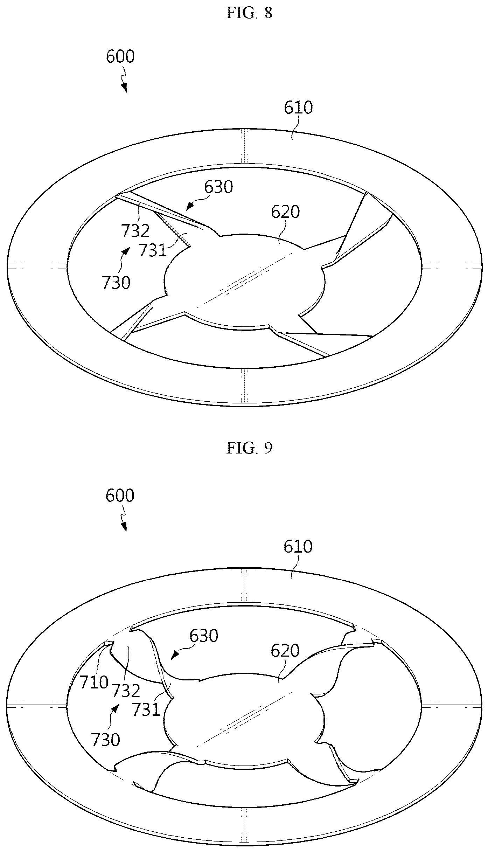

Referring to FIG. 8, the breaking induction portion 700 may be configured to include a twisted portion 730 formed by twisting the connecting portion 630. The twisted portion 730 may be formed by cutting the portion of the connecting portion 630 that is connected to the rim portion 610, twisting it so that the opposite surface (lower surface) is directed upward, and welding it to the rim portion 610.

In addition, when twisting the connecting portion 630 and connecting it to the rim portion 610, the degree of welding may be adjusted to induce fracture so that the rim portion 610 and the connecting portion 630 easily break. Here, a cut or groove (e.g., a notched groove) may be formed at the position where the rim portion 610 and the twisted portion 730 meet, facilitating the fracture of the rim portion 610 and the connecting portion 630.

For example, the twisted portion 730 may be configured to include a first portion 731 and a second portion 732. The first portion 731 is connected to the central portion 620. In addition, the second portion 732 is twisted and folded from the first portion 731 and then bonded to the rim portion 610.

As described above, if the twisted portion 730 is formed in the connecting portion 630, the gas inside the battery can 200 moves and collides with the twisted portion 730 to rotate. The gas moves and rotates, energy consumption increases, and the force is uniformly distributed in every directions, thereby reducing the explosive power caused by the gas.

In addition, when welding the connecting portion 630 in which the twisted portion 730 is formed to the rim portion 610, the welding degree may be adjusted, or a cut or groove (e.g., a notched groove) may be formed to facilitate the fracture of the rim portion 610 and the connecting portion 630 by the gas.

That is, the embodiment in FIG. 8 has the effects of facilitating the fracture of the rim portion 610 and the connecting portion 630 provided in the negative electrode collector board 600 to facilitate gas discharge, preventing an explosion due to the internal pressure according thereto, and consuming the energy possessed by the gas by the rotation of the gas through the twisted portion 730 to evenly distribute the force, thereby reducing the explosive power caused by the gas.

FIG. 9 shows a modification of the embodiment in FIG. 8 in which the twisted portion 730 is formed in a curved shape so as to rotate gas. The twisted portion 730 may have various curved shapes, and for example, referring to FIG. 9, the twisted portion 730 may be configured such that the connecting portion 630 rotates 180 degrees from the central portion 620 and is coupled to the rim portion 610.

In addition, as shown in FIG. 9, a notched groove 710 may be formed in the second portion 732 of the twisted portion 730.

The embodiment in FIG. 9 is more advantageous for gas rotation, compared to the embodiment in FIG. 8. However, the embodiment in FIG. 8 or the embodiment in FIG. 9 may be appropriately selected as needed.

Meanwhile, the detailed description of the embodiment in FIG. 8 may be applied to the embodiment in FIG. 8.

Referring to FIG. 10, the breaking induction portion 700 is formed as a groove, for example, a notched groove 710. In addition, it is formed as a groove in which the thickness (in the up-down direction) of the connecting portion 630 is reduced. However, although a pair of notched grooves 710 are formed on both the upper and lower surfaces of the connecting portion 630 in FIG. 5, the embodiment in FIG. 10 is different in that the notched groove 710 is formed only on the upper surface of the connecting portion 630.

In the case where the notched groove 710 is formed only on the upper surface of the connecting portion 630 as shown in FIG. 10, the negative electrode collector board 600 moves in the opposite direction (see the arrow in FIG. 11) due to the gas inside the battery can 200 as shown in FIG. 11. When the central portion 620 is deformed in the opposite direction as described above, the gas inside the battery can 200 is easily discharged. Here, if the gas continues to be generated after the central portion 620 is deformed in the opposite direction, the central portion 620 and the connecting portion 630 may eventually be broken. In the embodiment in FIG. 5, the central portion 620 of the negative electrode collector board 600 may also be deformed in the opposite direction due to the gas inside the battery can 200 as shown in FIG. 10.

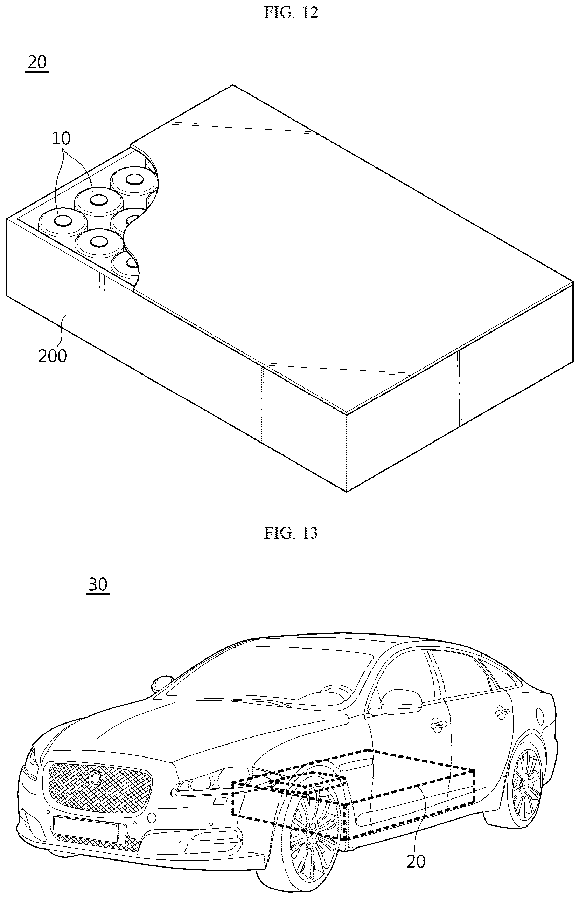

FIG. 12 is a diagram schematically illustrating the configuration of a battery pack including a cylindrical battery cell according to each embodiment of the present disclosure.

Referring to FIG. 12, a battery pack 20 according to an embodiment of the present disclosure may include one or more cylindrical battery cells 10 according to an embodiment of the present disclosure described above. In addition, the battery pack 20 may further include a pack housing 200 for storing the cylindrical battery cell 10, and various devices for controlling charging and discharging of the cylindrical battery cell 10, such as a BMS, a current sensor, a fuse, or the like

FIG. 13 is a diagram illustrating a vehicle including a battery pack according to each embodiment of the present disclosure.

Referring to FIG. 13, a vehicle 30 according to an embodiment of the present disclosure may include one or more cylindrical battery cells 10 or battery packs 20 according to each of the above-described embodiments. Here, the vehicle 30 includes various vehicles that are designed to use electricity, such as an electric vehicle or a hybrid vehicle.

Although terms indicating directions such as up, down, left, and right directions are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### Industrial Applicability

The present disclosure relates to a cylindrical battery cell, a battery pack and vehicle including the same, and a collector board, and it is particularly applicable to industries related to secondary batteries.

## Claims

1. A cylindrical battery cell comprising:
an electrode assembly configured in a structure in which a positive electrode plate, a negative electrode plate, and a separator interposed between the positive electrode plate and the negative electrode plate are wound in one direction;
a cylindrical battery can configured to store the electrode assembly and having a through-hole formed thereon;
a positive electrode collector board electrically connected to the positive electrode plate;
a cell terminal connected to the positive electrode collector board through the through-hole of the battery can; and
a negative electrode collector board electrically connected to the negative electrode plate,
wherein a breaking induction portion is formed on the positive electrode collector board or the negative electrode collector board so that at least a portion of the positive electrode collector board or the negative electrode collector board is broken by gas generated inside the battery can.

2. The cylindrical battery cell according to claim 1,
wherein the positive electrode collector board or the negative electrode collector board comprises:
a rim portion defining a rim;
a central portion spaced apart from the rim portion and coupled to the electrode assembly; and
a connecting portion configured to connect the rim portion and the central portion.

3. The cylindrical battery cell according to claim 2,
wherein the breaking induction portion is formed in the connecting portion.

4. The cylindrical battery cell according to claim 2,
wherein the breaking induction portion is formed in the connecting portion at a position where the central portion and the connecting portion meet.

5. The cylindrical battery cell according to claim 1,
wherein the breaking induction portion is formed as a notched groove.

6. The cylindrical battery cell according to claim 1,
wherein the breaking induction portion is formed as a through-hole.

7. The cylindrical battery cell according to claim 5,
wherein four connecting portions are provided, and
wherein eight notched grooves are provided such that a pair of notched grooves is formed in each connecting portion.

8. The cylindrical battery cell according to claim 5,
wherein the notched groove is formed to be recessed toward an inside of the connecting portion in a direction in which a width or thickness of the connecting portion is gradually or continuously reduced.

9. The cylindrical battery cell according to claim 2,
wherein the breaking induction portion is configured to include a twisted portion formed by twisting the connecting portion.

10. The cylindrical battery cell according to claim 9,
wherein the twisted portion comprises:
a first portion connected to the central portion; and
a second portion configured to be twisted and folded from the first portion and then bonded to the rim portion.

11. The cylindrical battery cell according to claim 9,
wherein the twisted portion is formed in a curved shape so as to rotate gas.

12. The cylindrical battery cell according to claim 11,
wherein the twisted portion is configured such that the connecting portion is rotated 180 degrees from the central portion and coupled to the rim portion.

13. A battery pack comprising at least one cylindrical battery cell according to any one of claims 1 to 12.

14. A vehicle comprising at least one cylindrical battery cell according to any one of claims 1 to 12.

15. A collector board electrically connecting an electrode assembly located at a portion where a venting portion is formed in a cylindrical battery cell, the collector board comprising:
a rim portion defining a rim;
a central portion spaced apart from the rim portion and coupled to the electrode assembly; and
a connecting portion configured to connect the rim portion and the central portion,
wherein a breaking induction portion is formed on the collector board so that at least a portion of the collector board is broken by gas generated inside the cylindrical battery cell.
